# EUROPEAN PATENT SPECIFICATION

(11) **EP 2 437 950 B1**
(45) Date of publication and mention of the grant of the patent: **27.04.2016**
(21) Application number: 09845599.1
(22) Date of filing: 01.06.2009
(51) Int. Cl.: F16B 7/04, F16F 1/44, F16F 1/373, F16F 1/30, B60G 11/113

(54) **A SUPPORT MEANS, A DEVICE FOR ATTACHING A FIRST VEHICLE MEMBER TO A SECOND VEHICLE MEMBER AND A VEHICLE SUSPENSION ARRANGEMENT**
STÜTZMITTEL, VORRICHTUNG ZUM ANBRINGEN EINES ERSTEN FAHRZEUGELEMENTS AN EINEM ZWEITEN FAHRZEUGELEMENT UND FAHRZEUGAUFHÄNGUNGSANORDNUNG
MOYEN DE SUPPORT, DISPOSITIF DE FIXATION DE PREMIER ÉLÉMENT DE VÉHICULE À UN SECOND ÉLÉMENT DE VÉHICULE ET AGENCEMENT DE SUSPENSION DE VÉHICULE

(43) Date of publication of application: 11.04.2012
(73) Proprietor: Volvo Lastvagnar AB, 405 08 Göteborg (SE)
(72) Inventor: PREIJERT, Stefan, S-415 07 Göteborg (DK)
(74) Representative: Eriksson, Tommy
(86) International application number: PCT/SE2009/000285
(87) International publication number: WO 2010/140928

(56) References cited:
- DE-A1-102004 010 621
- JP-A- H0 672 351
- JP-A- 62 075 144
- US-A1- 2005 253 351
- US-A1- 2006 103 103
- US-B1- 6 352 245

## Description

### FIELD OF THE INVENTION

The present invention relates to a support means for supporting two spaced U-bolts in a device for attaching a first vehicle member to a second vehicle member, wherein the support means comprises two opposed edge surfaces, each configured for contacting an inner surface of the U-bolts. The invention is further directed to a device for attaching a first vehicle member to a second vehicle member and a vehicle suspension arrangement.

The first vehicle member will below be referred to as a vehicle suspension member. The second vehicle member will below be referred to as a vehicle axle.

The invention will below be described for a heavy vehicle in the form of a cargo-transporting road vehicle in the form of a truck. This should however only be regarded as one possible application and the invention may further be applied in a people-transporting vehicle, such as a bus, an agricultural machine or a work machine for transporting cargo, material, earth etc.

In a truck, a transverse wheel axle is suspended to the vehicle frame via two elongated vehicle suspension members in the form of spring members. Each of the spring members is directed along frame side members. forms a metallic element and is positioned on top of the spring member. The U-bolts are positioned so that they straddle the saddle bracket and the spring member at a distance from each other. Thus, the legs of the U-bolts extend downwardly and a U-bolt cross element connecting the legs seat on the saddle bracket. Further, the device comprises means for securing the distal ends of the U-bolts.

According to one prior art design, the U-bolt cross element is substantially straight and the legs extend substantially at right angles to the cross element. The inner corners at the junction of the legs and the cross element have a rounded shape. Further, the corresponding outer corners of the saddle bracket have a complimentary rounded shape for contacting the inner corners of the U-bolts. However, due to tolerances, there will be a play between the rounded surfaces of the U-bolts and the saddle bracket. This play results in high stresses in the bent parts of the U-bolts during operation. This problem may be further amplified if the saddle bracket is displaced towards one of said U-bolt corners during mounting, wherein the complete play will be present on the other side.

Further, the U-bolts should be tightened extremely hard. However, due to relaxation, the U-bolts may be somewhat loosened during operation. This problem also contributes to the play between the rounded surfaces of the U-bolts and the saddle bracket. The play due to relaxation is more problematic the shorter the legs of the U-bolt are. In a truck, the legs of the U-bolts for the front axle are substantially shorter than the legs of the U-bolts for the rear axles. Thus, this problem is more evident at the front axle suspension.

US 2006/0103103 discloses a saddle which is configured to support two spaced apart U-bolts for attaching a vehicle suspension member to a vehicle axle. The saddle is made of a ductile material and comprises troughs that are configured to fit U-bolts.

JP 62 075 144 discloses an elastic body and a metallic plate which are fixed to each other by adhesives and which are configured to support a U-bolt.

DE 10 2004 010621 discloses a pressure plate positioned on top of parcel springs. The parcel of springs is joined to a pivotal carrying element with an elastic U-bolt.

US 6,352,245 discloses a member for connecting a front axle and front leaf spring. A support member is positioned between the leaf spring and a pair of U-bolts.

US 2005/0253351 discloses a mount interface for mounting a vehicle suspension to an axle housing. Support members are positioned between U-bolts and the vehicle suspension.

JP H06 72351 relates to a rear wheel steering device for a truck and the like, where the steering stability can be improved during high-speed travelling.

### SUMMARY OF THE INVENTION

An object of the invention is to achieve a support means which creates conditions for a longer life of a suspension device, and especially the U-bolts, during operation.

This object is achieved by a support means according to claim 1. Thus it is achieved by a the support means comprises two opposed edge surfaces, each if the saddle bracket is displaced towards one of said U-bolt corners during mounting, wherein the complete play will be present on the other side.

Further, the U-bolts should be tightened extremely hard. However, due to relaxation, the U-bolts may be somewhat loosened during operation. This problem also contributes to the play between the rounded surfaces of the U-bolts and the saddle bracket. The play due to relaxation is more problematic the shorter the legs of the U-bolt are. In a truck, the legs of the U-bolts for the front axle are substantially shorter than the legs of the U-bolts for the rear axles. Thus, this problem is more evident at the front axle suspension.

### SUMMARY OF THE INVENTION

An object of the invention is to achieve a support means, which creates conditions for a longer life of a suspension device, and especially the U-bolts, during operation.

This object is achieved by a support means according to claim 1. Thus, it is achieved by a support means, which comprises two opposed edge surfaces, each configured for contacting an inner surface of the U-bolts, wherein the support means comprises a flexible element, which is adapted for allowing a relative movement of the two opposed edge surfaces.

Especially, the relative movement of the two opposed edge surfaces allows a relative movement of the two opposed edge surfaces towards each other during mounting.

This design of the support means creates conditions for a tight fit between the two opposed edge surfaces of the support means and the corresponding inner surfaces (inner corners) of the U-bolts during operation. More specifically, the flexibility of the support means allows for a tight fit between the edge surfaces and the U-bolts irrespective of any misalignment between the support means and the U-bolts during mounting.

This design of the support means further creates conditions for using thinner U-bolts than prior art with the same clamping force or a higher clamping force. This in turn reduces the risk of clamping relaxation.

According to an example embodiment, the flexible element is positioned between the two opposed edge surfaces. This design creates conditions for a robust and space-efficient support means.

According to a further example embodiment, the support means comprises two at least partly spaced, rigid elements, that each rigid element comprises one of said edge surfaces and that the flexible element is positioned between the rigid elements. Due to this design, the flexible element allows movement between the two rigid elements.

According to a further example embodiment, the flexible element and the two spaced, rigid elements are connected to each other. This can be achieved in several different ways, such as a firm attachment of the mating surfaces, such as a chemical bonding, glue or the like. Preferably, the flexible element and the two spaced, rigid elements are designed with complimentary shaped surfaces for achieving a form fit.

Further preferred embodiment and advantages thereof emerge from the description below, the figures and the claims.

### BRIEF DESCRIPTION OF THE DRAWINGS

The invention will be explained below, with reference to the embodiment shown on the appended drawings, wherein
- FIG 1: is perspective view of a truck from behind,
- FIG 2: is a perspective view of a vehicle suspension arrangement according to a first embodiment in the truck in figure 1,
- FIG 3A, 3B and 3C: show a vehicle suspension support means according to a first embodiment,
- FIG 4: schematically shows a U-bolt during mounting, and
- FIG 5A, 5B and 5C: show a vehicle suspension support means according to a second embodiment.

### DETAILED DESCRIPTION OF A PREFERRED EMBODIMENT OF THE INVENTION

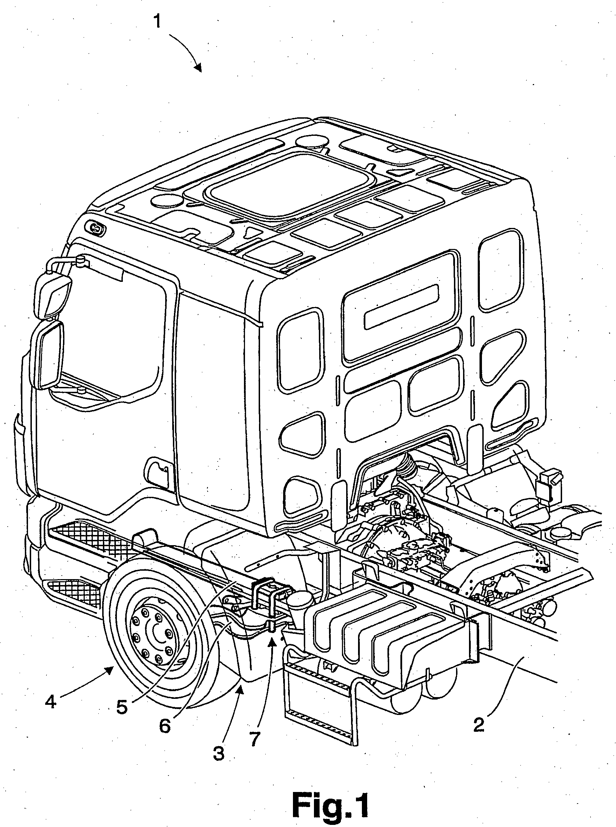

Figure 1 shows a truck 1 in a perspective view from behind. More precisely, a semi-trailer tractor is shown in figure 1. A semi-trailer can be connected to the semi-tractor 1 via a so-called fifth wheel (not shown).

The truck 1 comprises a frame 2, in the form of two substantially parallel longitudinal side members, each with a U-shaped profile, which are united by a plurality of cross members (not shown). The side and cross members are joined together by bolt or rivet fastenings. Further, figure 1 shows that a vehicle suspension arrangement 3 is arranged at a front axle 4. The suspension arrangement 3 comprises a first vehicle member 5 in the form of a suspension member extending in a longitudinal (front-to-rear) direction of the vehicle. Opposite ends of the suspension member 5 are rigidly connected to one of said frame side members 2. More precisely, the suspension member forms a leaf spring. The suspension arrangement 3 further comprises a second vehicle member 6 in the form of a transverse vehicle member. The term "transverse vehicle member" means a member extending in a vehicle transverse direction, i.e. in a direction perpendicular to the longitudinal direction of the vehicle. The transverse member forms a vehicle axle (or vehicle axle housing).

The suspension arrangement 3 further comprises a device 7 for attaching the vehicle suspension member 5 to the vehicle axle 6.

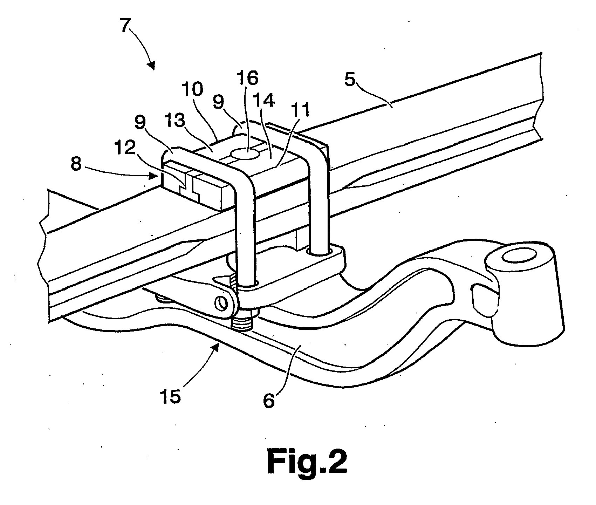

Figure 2 shows the vehicle suspension device 7 according to a first embodiment. The suspension device 7 comprises a vehicle suspension support means 8 for supporting two spaced U-bolts 9. The support means 8 is formed by a block, which is configured to be positioned on top of and in contact with the suspension member 5. The U-bolts 9 are configured to straddle the support means 8 at a distance from each other. Further, the U-bolts 9 are configured to straddle the vehicle suspension member 5. Further, the device 7 comprises means 15 for securing distal ends of the U-bolt legs in relation to the vehicle axle 6.

The support means 8 comprises two opposed edge surfaces 10,11, each configured for contacting an inner surface of the U-bolts. Said edge surfaces are elongated, substantially straight and parallel to each other. The support means 8 comprises a flexible element 12, which is adapted for allowing a relative movement of the two opposed edge surfaces. The flexible element 12 is positioned between the two opposed edge surfaces 10,11 for allowing a movement of the two opposed edge surfaces 10,11 towards each other during mounting. The term inner surface refers to a region at the inner corner of the U-bolt 9.

The support means 8 comprises two at least partly spaced, rigid elements 13,14, wherein each rigid element 13,14 comprises one of said edge surfaces 10,11 and the flexible element 12 is positioned between the rigid elements 13,14. The rigid element preferably forms a solid, elongated piece. Further, the rigid element is preferably formed by a metallic material. Each of the rigid elements 13,14 and the flexible element 12 has the same cross sectional shape along its complete length. The rigid elements 13,14 are completely spaced from each other along the entire length of the support means 8. The flexible element 12 and the two spaced, rigid elements 13,14 are connected to each other. Each of said edge surfaces 10,11 defines a longitudinal direction of the rigid element 13,14. Further, the flexible element 12 is continuous in a direction in parallel with the longitudinal direction of said opposed edge surfaces. Thus, the flexible element 12 is not interrupted in said direction.

Further, the support means 8 comprises a means 16 for directing the support means to its intended position on the spring member 5. Said direction means 16 is formed by an opening configured for mating with a correspondingly shaped projection.

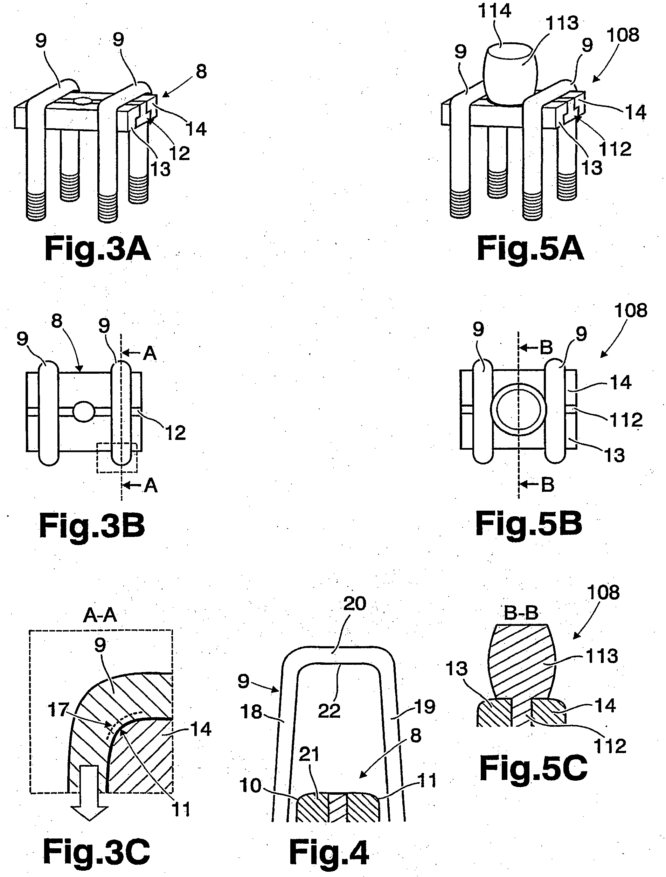

Figure 3A shows a perspective view of the support means 8 and the two spaced U-bolts 9 in their intended position. The flexible element 12 and the two spaced, rigid elements 13,14 are designed with complimentary shaped surfaces for achieving a form fit. In other words, the flexible element 12 and the two spaced, rigid elements 13,14 are designed with a similar geometric shape for matching each other.

The support means 8 has a symmetric design with regard to the position of the flexible element between said opposed edge surfaces. More specifically, the support means 8 is mirrored in a plane which is perpendicular to a plane defined by a lower, substantially: flat surface of the support means 8 and which is parallel with the extension direction of the rigid elements 13,14.

The flexible element 12 forms a solid piece. The flexible element 12 is elongated with a main extension direction in parallel with the extension direction of the edge surfaces 10,11. Further, the flexible element 12 at least to a predominant content comprises rubber. Preferably, the flexible element is formed by a one-piece rubber unit.

Figure 3B shows the support means 8 and the spaced U-bolts in figure 3A in a view from above. Figure 3C shows a partly cut view in the cross section A-A in figure 3B. Each of said two opposed edge surfaces 10,11 has a rounded shape (see reference numeral 11 in figure 3C) in a plane perpendicular to said longitudinal direction of the rigid element 14 along substantially the complete length. Further, the inner corner 17 of the U-bolt has a complimentary rounded shape. Due to the flexibility of the rubber element 12, in operation, there is substantially no play between the inner corner 17 of the U-bolt 9 and the external corner 11 of the support means 8.

Figure 4 shows a schematic side view of one of said U-bolts 9. The U-bolt comprises two legs 18,19 extending downwardly at each end of a U-bolt cross element 20. The legs 18,19 and the cross element 20 is of one-piece construction. The legs 18,19 of the U-bolt 9 extend in a diverging manner from the cross element 20 towards the distal ends. Each of the legs 18,19 is substantially straight. Thus, the legs 18,19 extend in a non-parallel relationship. The extension direction of one of the legs 18 crosses the extension direction of the other leg 19 at: a relatively small angle, preferably <30°. The angular relationship of the legs 18,19 will both guide the U-bolt 9 when mounting it to the support means 8 and also add an initial pre-pressure tension in the corner area of the U-bolt (see dashed line in figure 3C) when it is torqued to the axle.

Further, an external surface 21 of the support means .8 extending between the opposed edge surfaces 10,11 has a convex shape. Thus, the convex shape faces an inner surface 22 of the U-bolt connection element 20.

Fig 5A-5C shows a vehicle suspension support means 108 according to a second embodiment. The second embodiment differs from the first embodiment in that the flexible element 112 comprises a portion 113 projecting from the elongated main portion between the rigid elements 13,14. The projecting portion 113 forms a one-piece unit with the elongated main portion of the flexible element. The projecting portion 113 forms a bump stop. The projecting portion 113 projects between the U-bolts 9. An upper surface 114 of the projecting portion 113 is configured to allow abutment against the frame during operation and thereby form a limit for the vertical movements of the suspension member 5 and the vehicle axle 6.

The invention is not in any way limited to the above described embodiments, instead a number of alternatives and modifications are possible without departing from the scope of the following claims.

According to an alternative design of the flexible element, it may be interrupted in a direction in parallel with the longitudinal direction of the opposed, rounded corners.

According to an alternative, or complimentary, design of the flexible element, it comprises at least one spring element, a flexible sheet structure or other flexible structure.

Further, the support means is not necessarily a separate member, but at least part of it may form part of a rigid structure, such as the vehicle suspension member. For example, one of said two spaced, rigid elements may be formed integral with said rigid structure and the other rigid element may be formed by a movable unit. Further, the support means may have a non-symmetric design with regard to the position of the flexible element between said opposed edge surfaces. In other words, one of said rigid elements may have a larger extension in a direction perpendicular to the extension direction of the edges than the other rigid element.

Further, the flexible rubber element and the two spaced, rigid elements may be rigidly attached to each other, such as via a vulcanized joint.

Further, the invention covers also solutions wherein the flexible element is not positioned directly between the rigid elements comprising the two opposed edge surfaces in a plane defined by the extension directions of the rigid elements. For example, a flexible element may be connected to each rigid element at a portion thereof facing away from the U-bolt cross element, which bridges the distance between the two U-bolt legs. In other words, the flexible element can be arranged below the rigid elements and between the downwardly extending U-bolt legs.

## Claims

1. A vehicle suspension arrangement comprising a first vehicle member (5), a second vehicle member (6), and a device for attaching the first vehicle member to the second vehicle member, wherein the device comprises two U-bolts (9) and a support means (8,108) for supporting the U-bolts, wherein the U-bolts are configured to straddle the support means at a distance from each other **characterized in that** the support means (8,108) comprises two opposed edge surfaces (10,11), each configured for contacting an inner surface (17) of the U-bolts (9), wherein the support means (8,108) comprises a flexible element (12,112), which is adapted for allowing a relative movement of the two opposed edge surfaces, wherein the support means further comprises two at least partly spaced, rigid elements (13,14), each rigid element comprises one of said edge surfaces (10,11) and that the flexible element (12,112) is positioned between the rigid elements.

2. The vehicle suspension arrangement according to claim 1, **characterized in that** the flexible element (12,112) is positioned between the two opposed edge surfaces (10,11).

3. The vehicle suspension arrangement according to claim 1, **characterized in that** the flexible element (12,112) and the two spaced, rigid elements (13,14) are connected to each other.

4. The vehicle suspension arrangement according to any one of the preceding claims, **characterized in that** the flexible element (12,112) and the two spaced, rigid elements (13,14) are designed with complimentary shaped surfaces for achieving a form fit.

5. The vehicle suspension arrangement according to any one of the preceding claims, **characterized in that** each of said edge surfaces (10,11) is elongated and defines a longitudinal direction of the rigid element (13,14) and that the flexible element (12,112) is continuous in a direction in parallel with said opposed edge surfaces and/or a support means **wherein** the support means (8,108) has a symmetric design with regard to the position of the flexible element (12,112) in relation to said opposed edge surfaces (10,11).

6. The vehicle suspension arrangement according to any one of the preceding claims, **characterized in that** the flexible element (12,112) forms a solid piece.

7. The vehicle suspension arrangement according to any one of the preceding claims, **characterized in that** the flexible element (12,112) at least to a predominant content comprises rubber.

8. The vehicle suspension arrangement according to any one of the preceding claims, **characterized in that** each of said two opposed edge surfaces (10,11) has a rounded shape and/or a support means wherein an external surface (21) of the support means (8) extending between the opposed edge surfaces (10,11) has a convex shape.

9. The vehicle suspension arrangement according to any one of the preceding claims, **characterized in that** the first vehicle member (5) is a leaf spring.

10. The vehicle suspension arrangement according to any one of the preceding claims, **characterized in that** the second vehicle member (6) is a vehicle axle.

## Patentansprüche

1. Fahrzeugaufhängungsanordnung, die ein erstes Fahrzeugelement (5), ein zweites Fahrzeugelement (6) und eine Vorrichtung zur Befestigung des ersten Fahrzeugelements an dem zweiten Fahrzeugelement umfasst, wobei die Vorrichtung zwei U-Bolzen (9) und eine Halterungseinrichtung (8, 108) zur Halterung der U-Bolzen umfasst, wobei die U-Bolzen so ausgebildet sind, dass sie die Halterungseinrichtung in einem Abstand voneinander überspannen, **dadurch gekennzeichnet, dass** die Halterungseinrichtung (8, 108) zwei entgegengesetzte Randflächen (10, 11) umfasst, die jeweils für einen Kontakt mit einer inneren Fläche (17) der U-Bolzen (9) ausgebildet sind, wobei die Halterungseinrichtung (8, 108) ein flexibles Element (12, 112) umfasst, das dazu ausgelegt ist, eine relative Bewegung der zwei entgegengesetzten Randflächen zu ermöglichen, wobei die Halterungseinrichtung außerdem wenigstens zwei wenigstens teilweise im Abstand angeordnete steife Elemente (13, 14) umfasst, wobei jedes steife Element eine der Randflächen (10, 11) umfasst, und dass das flexible Element (12, 112) zwischen den steifen Elementen angeordnet ist.

2. Fahrzeugaufhängungsanordnung nach Anspruch 1, **dadurch gekennzeichnet, dass** das flexible Element (12, 112) zwischen den zwei entgegengesetzten Randflächen (10, 11) angeordnet ist.

3. Fahrzeugaufhängungsanordnung nach Anspruch 1, **dadurch gekennzeichnet, dass** das flexible Element (12, 112) und die zwei im Abstand angeordneten steifen Elemente (13, 14) miteinander verbunden sind.

4. Fahrzeugaufhängungsanordnung nach irgendeinem der vorhergehenden Ansprüche, **dadurch gekennzeichnet, dass** das flexible Element (12, 112) und die zwei im Abstand angeordneten steifen Elemente (13, 14) mit komplementär geformten Flächen zur Erreichung einer Formpassung ausgebildet sind.

5. Fahrzeugaufhängungsanordnung nach irgendeinem der vorhergehenden Ansprüche, **dadurch gekennzeichnet, dass** jede der Randflächen (10, 11) länglich ist und eine Längsrichtung des steifen Elements (13, 14) definiert und dass das flexible Element (12, 112) in einer Richtung parallel zu den entgegengesetzten Randflächen und/oder einer Halterungseinrichtung durchgehend ist, wobei die Halterungseinrichtung (8, 108) ein symmetrisches Design bezüglich der Position des flexiblen Elements (12, 112) in Bezug auf die entgegengesetzten Randflächen (10, 11) aufweist.

6. Fahrzeugaufhängungsanordnung nach irgendeinem der vorhergehenden Ansprüche, **dadurch gekennzeichnet, dass** das flexible Element (12, 112) ein massives Stück bildet.

7. Fahrzeugaufhängungsanordnung nach irgendeinem der vorhergehenden Ansprüche, **dadurch gekennzeichnet, dass** das flexible Element (12, 112) wenigstens in einem überwiegendem Anteil Gummi umfasst.

8. Fahrzeugaufhängungsanordnung nach irgendeinem der vorhergehenden Ansprüche, **dadurch gekennzeichnet, dass** jede der zwei entgegengesetzten Randflächen (10, 11) eine abgerundete Form und/oder eine Halterungseinrichtung aufweist, wobei eine äußere Fläche (21) der Halterungseinrichtung (8), die sich zwischen den entgegengesetzten Randflächen (10, 11) erstreckt, eine konvexe Form aufweist.

9. Fahrzeugaufhängungsanordnung nach irgendeinem der vorhergehenden Ansprüche, **dadurch gekennzeichnet, dass** das erste Fahrzeugelement (5) eine Blattfeder ist.

10. Fahrzeugaufhängungsanordnung nach irgendeinem der vorhergehenden Ansprüche, **dadurch gekennzeichnet, dass** das zweite Fahrzeugelement (6) eine Fahrzeugachse ist.

## Revendications

1. Agencement de suspension de véhicule comprenant un premier élément de véhicule (5), un deuxième élément de véhicule (6), et un dispositif pour fixer le premier élément de véhicule au deuxième élément de véhicule, dans lequel le dispositif comprend deux boulons en U (9) et un moyen de support (8, 108) pour supporter les boulons en U, où les boulons en U sont configurés pour chevaucher le moyen de support à une distance les uns des autres, **caractérisé en ce que** le moyen de support (8, 108) comprend deux surfaces de bord opposées (10, 11), dont chacune est configurée pour venir en contact avec une surface intérieure (17) des boulons en U (9), où le moyen de support (8, 108) comprend un élément flexible (12, 112), qui est adapté pour permettre un mouvement relatif des deux surfaces de bord opposées, où le moyen de support comprend en outre deux éléments rigides (13,14), espacés au moins en partie chaque élément rigide comprend l'une desdites surfaces de bord (10, 11) et l'élément flexible (12, 112) est positionné entre les éléments rigides.

2. Agencement de suspension de véhicule selon la revendication 1, **caractérisé en ce que** l'élément flexible (12, 112) est positionné entre les deux surfaces de bord opposées (10, 11).

3. Agencement de suspension de véhicule selon la revendication 1, **caractérisé en ce que** l'élément flexible (12, 112) et les deux éléments rigides, espacés (13, 14) sont reliés entre eux.

4. Agencement de suspension de véhicule selon l'une quelconque des revendications précédentes, **caractérisé en ce que** l'élément flexible (12, 112) et les deux éléments rigides (13, 14), espacés sont conçus avec des surfaces de forme complémentaire pour obtenir un ajustement de forme.

5. Agencement de suspension de véhicule selon l'une quelconque des revendications précédentes, **caractérisé en ce que** chacune desdites surfaces de bord (10, 11) est allongée et définit une direction longitudinale de l'élément rigide (13, 14) et **en ce que** l'élément flexible (12, 112) est continu dans une direction en parallèle avec lesdites surfaces de bord opposées et/ou un moyen de support, où le moyen de support (8, 108) présente une conception symétrique par rapport à la position de l'élément flexible (12, 112) par rapport auxdites surfaces de bord opposées (10, 11).

6. Agencement de suspension de véhicule selon l'une quelconque des revendications précédentes, **caractérisé en ce que** l'élément flexible (12, 112) forme une pièce solide.

7. Agencement de suspension de véhicule selon l'une quelconque des revendications précédentes, **caractérisé en ce que** l'élément flexible (12, 112), à au moins un contenu prédominant, comprend du caoutchouc.

8. Agencement de suspension de véhicule selon l'une quelconque des revendications précédentes, **caractérisé en ce que** chacune desdites deux surfaces de bord opposées (10, 11) présente une forme arrondie et/ou un moyen de support, où une surface externe (21) du moyen de support (8) s'étendant entre les surfaces de bord opposées (10, 11) présente une forme convexe.

9. Agencement de suspension de véhicule selon l'une quelconque des revendications précédentes, **caractérisé en ce que** le premier élément de véhicule (5) est un ressort à lames.

10. Agencement de suspension de véhicule selon l'une quelconque des revendications précédentes, **caractérisé en ce que** le deuxième élément de véhicule (6) est un essieu de véhicule.
